# EUROPEAN PATENT SPECIFICATION

(11) **EP 0 891 253 B1**
(45) Date of publication and mention of the grant of the patent: **06.08.2003**
(21) Application number: 97941163.4
(22) Date of filing: 05.09.1997
(51) Int. Cl.: G11B 7/26

(54) **STAMPER FOR TWO LAYERED DISC**
MATRIZE FÜR EINE ZWEISCHICHTIGE PLATTE
MATRICE POUR DISQUE A DEUX COUCHES DE DONNEES

(30) Priority: 05.09.1996 US 708454
(43) Date of publication of application: 20.01.1999
(73) Proprietor: WEA Manufacturing, Inc., Olyphant, PA 18447 (US)
(72) Inventor: JENKINS, Harold, Nanticoke, PA 18634 (US)
(74) Representative: Shaya, Darrin Maurice
(86) International application number: IB9701225
(87) International publication number: WO98009806

(56) References cited:
- EP-A- 0 706 178
- EP-A- 0 720 159
- WO-A-96/04650
- US-A- 5 679 429

## Description

This invention relates to the manufacture of compact discs in which two layers of optical data are read from one side of the disc. In particular the invention relates to a process for molding data pits onto such a product.

### Background Of The Invention

Compacts discs, called DVD (Digital Versitile Disc) have been proposed in which there are two surfaces of data both of which can be read from a single side of the disc. This is obtained by putting a semi-transmissive coating on the top of the bottom layer and using an optically clear adhesive to glue both sides together. The top side is then coated with a normal amount of aluminum.

The various steps in the manufacturing of the data surfaces by photo lithographic and molding processes are well known and employ the construction of masters. The DVD double-sided disc would have a capacity of about ten gigabytes of data and have two 0.6 mm thickness discs, having a reflective layer on a signal layer and bonded so that the signal layers face each other with a small space of bonding resin layer.

One problem is in the sense of rotation of the second side. It has to be the same as the sense of rotation of the first side. This is accomplished by reversing the spindle motor during mastering.

In the conventional manufacturing process, successive images of the data are formed: mother and daughter or stamper. The stamper generation is conventionally used in an injection molding machine.

EP-A-0 706 178 discloses a compact disc having two layers of optical data, in which each layer has the optical data (pits and lands) impressed in an injection molding process. Since the two layers of data face each other, had they been recorded in the identical manner one of them would be rotating in the wrong sense, i.e. a disc designed for counterclockwise rotation would be rotating clockwise. However, in this disclosure, as explained above, the correct product results because for one of the two data surfaces the direction of mastering is reversed.

### Brief Description of the Invention

The present invention provides a method as set forth in the independent claim.

The reversal of the spindle motor during mastering, which produces a distinct master usable only in the manufacture of a particular data surface of the two surfaced disc is avoided by employing the mother image formed during electro-forming as a stamper in the injection molding process.

This provides the advantage that two stamper libraries (one clockwise, one counterclockwise) do not have to be maintained. Furthermore the two sides of the disc may be interchangeable during the manufacturing process, allowing additional combinations of information during that process. Perhaps most important, existing libraries of metal masters that have been generated in the past for the original CD or CD-ROM can be used without having to cut a new master.

### Brief Description of the Drawings

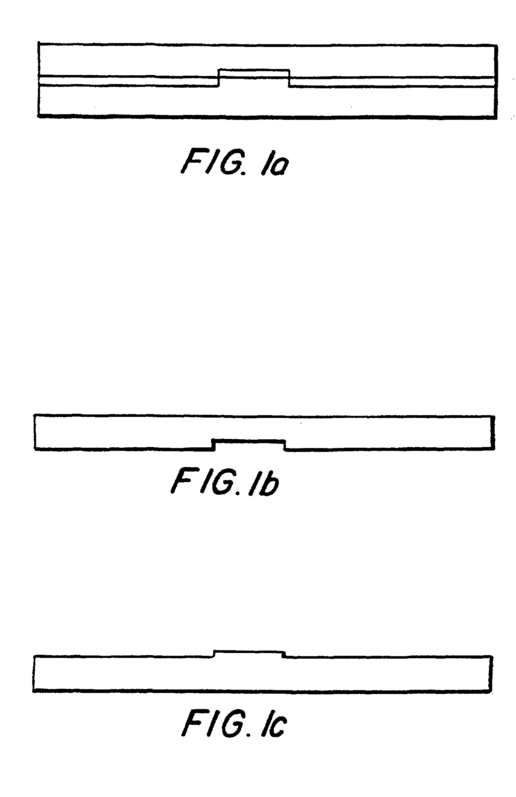

Fig. 1-a depicts in cross-section a 2-layer DVD disc.
Fig. 1-b depicts in cross-section the top layer of a DVD disc pressed from a stamper with the read side on top.
Fig. 1-c depicts in cross-section the second layer of the DVD disc pressed from a Mother with the read side on top.
Fig. 2 is a schematic representation of the orientation of a bit pattern on the various generations and on the DVD discs obtained by using them as molds.

### Detailed Description Of A Preferred Embodiment

In the manufacture of a 2-layer DVD disc, geometry dictates that the pit structure on the second layer must be reversed with respect to the first layer, while the same direction of pit track layout must be present on each layer. In the past, this has been dealt with by reversing the direction of mastering on the second layer. However the requisite geometry may be achieved by using a Mother as a Stamper for the second layer.

In a 2-layes DVD disc, the pit geometry of the first layer is the same as the geometry of a standard CD, albeit with 0.6 mm thickness of polycarbonate instead of 1.2 mm. The metalization on the first layer is semi-transparent and is separated from the second layer by an optically transparent adhesive. The pits on the second layer are also placed at a distance of approximately 0.6 mm from the read side of the DVD disc, and the metalization layer is read directly - effectively, on the second layer the DVD lens reads what would be the "inside" of a CD's pits. The flat side of the second layer - the "read" side on the top disc, or any normal CD - is the "print" side of the CD disc.

Consider a selection consisting of a Master cut with a single pit. A 2-layer DVD disc that consists of the same data (Fig 1-a) is constructed. On a stamper, the mastering pit becomes a "bump". The bump presses a pit into the molded disc. This disc is metalized, and the laser reads a "bump" through the flat face of the disc (Fig. 1-b).

In the Mother of this same selection, the pit is replicated as a pit. When this Mother is then used as a Stamper in the molding process, the replica will consist of a single "bump". This "bump" is then metalized. In a normal CD player, the laser would read the "bump" as a pit. But in the second layer of the DVD disc, the metalization layer is read directly, so the "bump" is read as a '"bump" (Fig. 1-c). Thus both layers of this DVD disc contain the same information, which is the expectation desired.

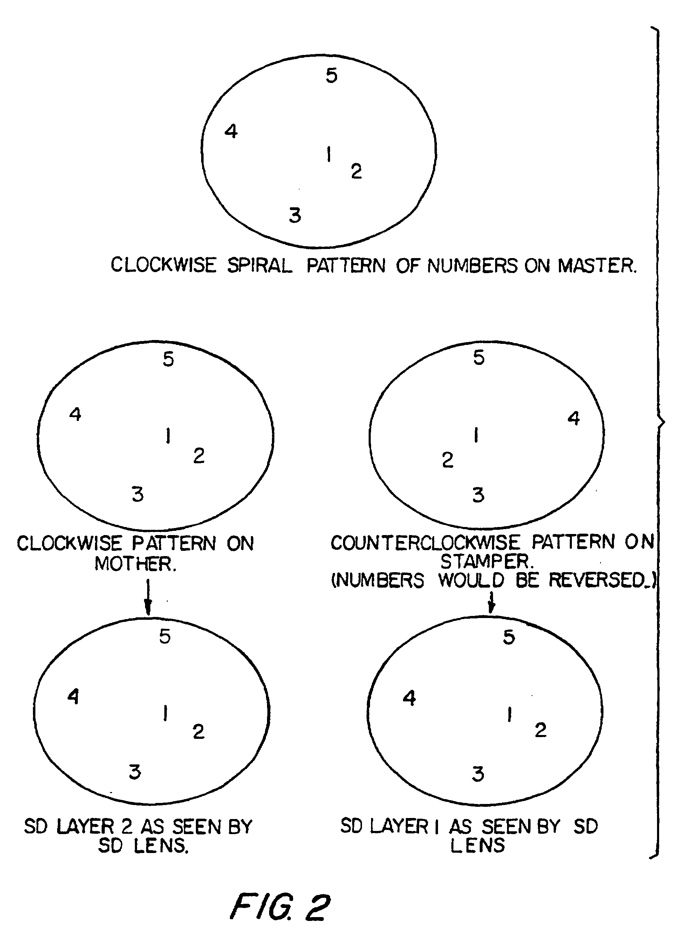

Consider a master consisting of the numbers 1,2,3,4,5 spiraling in a clockwise direction from center to edge. The stamper will consist of the reversed images of the numbers 1,2,3,4,5 spiraling in a counter-clockwise direction from center to edge, while the Mother will be identical in appearance to the Master. When the Stamper is used to make a disc, the disc as seen by the laser will consist of the numbers 1,2,3,4,5 spiraling in a clockwise direction from center to edge. When the Mother is used to press the second-layer DVD disc, the metalized side will be seen by the DVD laser to also consist of the numbers 1,2,3,4,5 spiraling in a clockwise direction from center to edge. (Fig. 2)

## Claims

1. A method of forming a disc viewable from only one side, comprising bonding separately fabricated compact discs to form a composite disc wherein the data on each data surface is readable from a single side of the composite disc;
wherein, in the fabrication of one of the separately fabricated compact discs, the data for an inner surface of one side of the composite disc is impressed in a molding process using a mold of a stamper generation;
**characterised that**, in the fabrication of the other of the separately fabricated compact discs, the data for an inner surface of the other side of the composite disc is impressed in a molding process using a negative of the stamper generation.

2. A method as claimed in claim 1, wherein the said negative is the previous generation relative to the stamper generation.

## Patentansprüche

1. Verfahren zum Bilden einer Disk, die von nur einer Seite sichtbar ist, umfassend das Binden von getrennt hergestellten Kompaktdisks, um eine zusammengesetzte Disk zu bilden, wobei die Daten auf jeder Datenoberfläche von einer einzelnen Seite der zusammengesetzten Disk lesbar sind;
wobei bei der Herstellung von einer der getrennt hergestellten Kompaktdisks die Daten für eine innere Oberfläche von einer Seite der zusammengesetzten Disk in einem Formungsprozess unter Verwendung eines Formstücks einer Matrizengeneration eingedrückt werden;
**dadurch gekennzeichnet, dass** bei der Herstellung der Anderen der getrennt hergestellt Kompaktdisks die Daten für eine innere Oberfläche der anderen Seite der zusammengesetzten Disk in einem Fonnungsprozess unter Verwendung eines Negativs der Matrizengeneration eingedrückt werden.

2. Verfahren nach Anspruch 1, wobei das besagte Negativ die vorangehende Generation relativ zu der Matrizengeneration ist.

## Revendications

1. Procédé de formation d'un disque visible uniquement d'un côté, comprenant la liaison de disques compacts fabriqués séparément pour former un disque composite, les données sur chaque surface de données étant lisibles à partir d'un seul côté du disque composite;
dans lequel, au cours de la fabrication de l'un des disques compacts à fabrication séparée, les données pour une surface interne d'un côté du disque composite sont imprimées au cours d'un procédé de moulage utilisant un moule de la génération à matrice de pressage;
**caractérisé en ce que**, lors de la fabrication de l'autre des disques compacts fabriqués séparément, les données pour une surface interne de l'autre côté du disque compact sont imprimées au cours d'un procédé de moulage utilisant un négatif de la génération à matrice de pressage.

2. Procédé selon la revendication 1, dans lequel ledit négatif constitue la génération antérieure par rapport à la génération à matrice de pressage.
